(19) Europäisches Patentamt
European Patent Office
Office européen des brevets

(11) **EP 2 093 940 A1**

(12) **EUROPEAN PATENT APPLICATION**

(43) Date of publication:
**26.08.2009 Bulletin 2009/35**

(51) Int Cl.:
***H04L 12/28*** (2006.01)

(21) Application number: **08368005.8**

(22) Date of filing: **25.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Institut Eurecom G.I.E.**<br>**06904 Sophia-Antipolis (FR)** | (72) Inventor: **Filali, Fethi**<br>**06600 Antibes (FR)**<br><br>(74) Representative: **Schuffenecker, Thierry**<br>**120 Chemin de la Maure**<br>**06800 Cagnes sur Mer (FR)** |

(54) **Process for controlling the association of one mobile terminal to one particular access point belonging to one wireless network**

(57) A process for controlling the association of one terminal (201) to one particular access point (210, 220) belonging to a wireless network comprising a set of access points.

The process comprises the steps of arranging at least two dedicated Wireless Measurement (Wimeter) devices (211, 221) located in the close vicinity of two respective access points (210, 220), said devices continuously computing an estimation of the available bandwidth for the dedicated access point;
- arranging a centralized Radio Resources Management (RRM) device (299) for the purpose of collecting the results of said computation;
- running a process of Access Point Association Control (APAC) for every new terminal (201) requesting access to the wireless network.

The APAC procedure comprises the steps of:
- capturing (401) the parameters of the visible access points;
- associating (402) said new terminal (201) to the access point offering the higher level of signal ;
- generating and transmitting (403) a RRM discovery request (RRM DISCOVERY REQUEST) for requesting benefit of service provided by said Radio Resources Management (RRM) device (299);
- detection (404) of a RRM discovery reply (RRM DISCOVERY REPLY) from said RRM device (299) confirming access to said service;
- in response to a query presented by a running application within said new terminal (201), generation and transmission (405, 406) to said Radio Resources Management (RRM) device (299) of a bandwidth request message (BANDWIDTH REQUEST) requesting allocation of given bandwidth resources;
- waiting (407) for a bandwidth reply (BANDWIDTH REPLY) comprising information collected from said Wireless Measurement (Wimeter) devices (211, 221) associated to visible access point, said reply being prepared and forwarded by said Radio Resources Management device (299);
- controlling (408) association to one particular access point based on said information forwarded by said Bandwidth reply message received from said RRM device (299).

Fig. 2

**Description**

**Technical field**

The present invention relates to wireless communication and more particularly for a process and apparatus for improving connectivity in a wireless network.

**Background Art**

Wireless telecommunications are spreading rapidly in the world. With the development of the 802.11 standard, the wireless communication is now available for any end user who can rapidly set up and operate a WiFi (Wireless Fidelity) network.

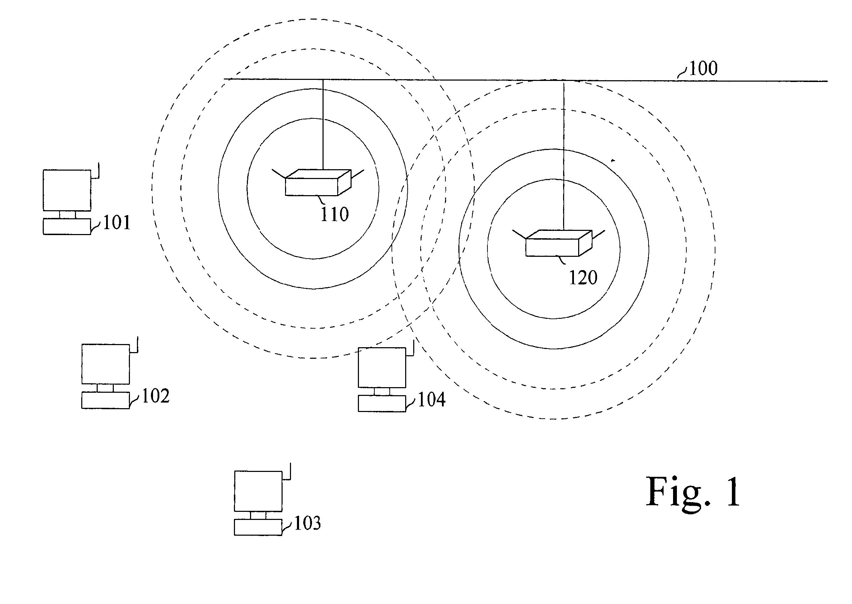

With respect to Figure 1, there is illustrated the organization of a WiFi network according to the well known IEEE 802.11 Standard, which is based on a set of Access Points connected to a Local Area Network (LAN) and providing wireless access to a set of mobile devices, such as laptop computers fitted with radio interface cards.

Generally speaking, when one laptop or mobile device is switched on, it recognizes the presence of some visible access points and automatically associates to the one having the higher signal. This is basically illustrated in Figure 1 showing a Local Access Network (LAN) 100 having two distinctive Access Points, respectively 110 and 120, providing wireless access to the network to mobile computers 101-104. Each mobile computer gets attachment to the particular Access Point providing the higher signal and it can be seen that all computers will get access through Access Point 110 which, consequently, will be subject to a heavy traffic that may lead to a decrease of the network capacity due to MAC frames collisions.

This mechanism of selecting an access point based on the strength of the signal has the advantage to be simple and to give satisfactorily results, provided that one particular Access Point is not overloaded with a high number of associated mobile devices already consuming a huge part of the bandwidth which the Access Point makes available. In such a situation, it might well occur that any new terminal which is switched on in the environment shall be, again, associated with that overloaded Access Point irrespective of the fact that some other Access Point, even in the vicinity in the network, might well serve the new incoming terminal.

Therefore, there is a wish for an improved mechanism providing better association of mobile terminals in 802.11-based WLANs.

**Summary of the invention**

It is an object of this invention to provide an enhanced association process providing communication of a mobile terminal to a 802.11-based wireless network.

It is another object of this invention to provide a new algorithm providing effective estimation of the bandwidth available in an access point implementing the IEEE 802.11 Standard.

It is a further objective of this invention to provide radio resources management in WLAN based on the estimation of the available bandwidth in IEEE 802.11.

It is still another objective of the present invention to provide a access point association process which is based on an estimation of the bandwidth available for different access point.

The invention achieves those goals by providing a process for controlling the association of one mobile terminal to one particular access point belonging to a wireless network, the process comprises the steps of:

-     arranging two dedicated Wireless Measurement (Wimeter) devices which are located in the close vicinity of two respective access points. Each one of these device, is called Wimeter and it is continuously computing an estimation of the available bandwidth for its dedicated access point;
-     arranging a centralized Radio Resources Management (RRM) device for the purpose of collecting the results of the computations made by the Wimeter devices;
-     setting a Mobile Terminal Controller module (MTC) in each mobile terminal to be connected to the wireless network, said module being designed for discovering the RRM device and for exchanging messages with it in order to select the optimal access point.
-     running a process of Access Point Association Control (APAC) for every new terminal requesting access to the wireless network.

The APAC procedure comprises the steps of:

-     capturing the parameters of the visible access points;

- associating the new terminal to the access point offering the higher level of signal;
- generating and transmitting a RRM discovery request (RRM DISCOVERY REQUEST) for requesting benefit of service provided by said Radio Resources Management (RRM) device;
- detection of a RRM discovery reply (RRM DISCOVERY REPLY) from said RRM device confirming access to said service;
- in response to a query presented by a running application through the MTC module within said new terminal, generation and transmission to said Radio Resources Management (RRM) device of a bandwidth request message (BANDWIDTH REQUEST) to determine the set of Access Points that can fulfil its requirement in terms of bandwidth.
- waiting for a bandwidth reply (BANDWIDTH REPLY) comprising information collected from said Wireless Measurement (Wimeter) devices associated to visible access point, said reply being prepared and forwarded by said Radio Resources Management device (RRM);
- controlling association to one particular access point based on said information forwarded by said BANDWIDTH REPLY message received from said RRM device.

In one embodiment, the process involves the step of receiving within said terminal (201) the collection of the results of the computation performed by said Wimeter devices, and using such collected data for controlling the association to one particular access point.

Alternatively, the centralized Radio Resources Management (RRM) device (299) uses the collected data computed by said Wireless Measurement (Wimeter) devices and selects one particular access point which is identified into said BANDWIDTH REPLY forwarded to the new terminal requesting access to the wireless network.

Preferably, the Wireless Measurement (Wimeter) device is embedded as hardware circuitry with software executable code within said associated access point.

Alternatively, the Wireless Measurement (Wimeter) device is separate from the associated access box, what allows the use of commercially available access points. In this case the 802.11 interface of the Wimeter device should be set to the same frequency channel as the dedicated Access Point to monitor.

In one embodiment, the Wireless Measurement (Wimeter) device computes an estimation of the available bandwidth from the estimation of the following parameters during each measurement of one period $\Delta_t$.

- $N_{data}^{(i)}$ : Number of data frames observed during $\Delta_t$.

- $N_{ack}^{(i)}$ : Number of ack frames observed during $\Delta_t$.

- $N_{rts}^{(i)}$ : Number of rts frames observed during $\Delta_t$.

- $N_{cts}^{(i)}$ : Number of cts frames observed during $\Delta_t$.

- $N_{bytes}^{(i)}$ : Total number of bytes sent during $\Delta_t$.

- *NetworkLoad*$^{(i)}$: the traffic load in bps (bits per seconds) during $\Delta_t$ expressed as follows

$$NetworkLoad^{(i)} = \frac{N_{bytes}^{(i)} * 8}{\Delta_t}$$

$$\Delta_{idle}^{(i)} = \Delta_t \left( 1 - \frac{NetworkLoad^{(i)}}{ChannelCapacity} \right)$$

with *ChannelCapacity* is the maximum transmission capacity in the networks expressed in bps (bits per second).

The invention also provides with a Wireless Measurement device to be associated to one access point of a wireless network which is able to communicate with a centralized Radio Resources Management (RRM) device for the purpose of communicating the results of said computation.

The Wireless Measurement (Wimeter) device comprises:

- means for receiving from said centralized Radio Resources Management (RRM) device (299) a message requesting bandwidth measurement comprising data representative of the communication of a new terminal requesting access to the wireless network,
- means for generating an estimated value of the available bandwidth for the attached access point to said centralized Radio Resources Management (RRM) device (299) for the purpose of collecting the results of said computation;

At last, the invention carries out a terminal, such as a mobile terminal which comprises means for executing the process defined above, as well as an apparatus comprising executable code for performing the process defined in the claims.

**Description of the drawings**

Other features, objects and advantages of the invention will be made clear when reading the following description and drawings, only given by way of non-restrictive examples. In the accompanying drawings:

Figure 1 illustrates a typical wifi architecture with two access points providing access to a wireless connection.

Figure 2 illustrates the general principle of the process and apparatus of the present invention.

Figure 3 illustrates the diagram of the messages exchanged between the RRM WLAN 299 and the two Wimeter devices 211 and 221.

Figure 4 illustrates the flow chart of the process executed within the terminal for controlling the association to one particular access point.

Figure 5 illustrates the process executed by the RRM WLAN for collecting information provided by the different Wimeter devices assigned to the access point being visible to terminal 201.

Figure 6 shows a general overview of the estimation of the available bandwidth

Figure 7 illustrates the basic overview of the Wireless Measurement algorithm used in the preferred embodiment.

**Description of the preferred embodiment of the invention**

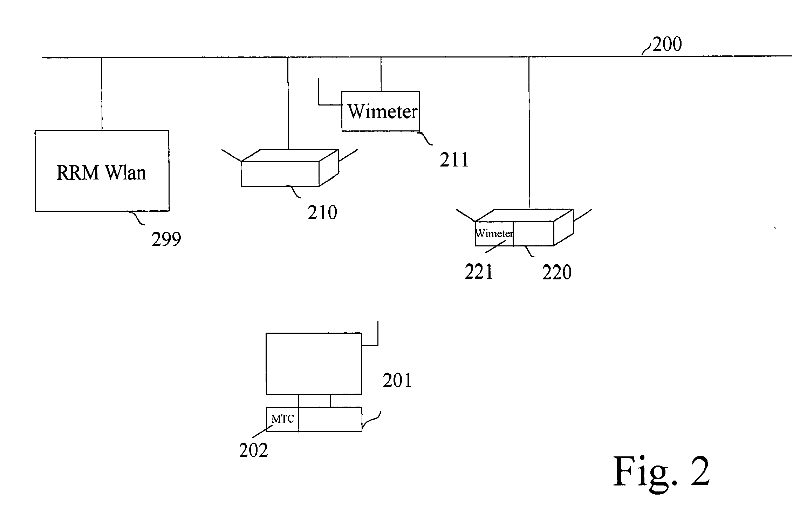

With respect to Figure 2 there is now described in detail the general architecture of the wireless connection in accordance with the present invention.
A Local Access Network (LAN) 200 comprises a set of access points, such as access points 210 and 220 offering wireless access to the LAN network. Preferably, the wireless connection complies with the 802.11 standard, but the skilled man will apply the principle of the invention to any other kind of wireless technologies. Further, for the sake of clarity, all computers which are attached to the wireless network are assumed to be mobile computers although a skilled man will clearly adapt the teaching of the invention to any kind of personal computer, server or devices etc.... which are likely to be "attached" by a wireless connection to the network.
In the architecture of the invention, every access point is associated with a Wireless Measurement function - so called Wimeter - providing estimation of the available bandwidth for the dedicated access point.
In the preferred embodiment, the so called Wimeter function is embodied within the access point, such as illustrated with Access point 220 which incorporates a specific circuit 221 providing the wireless measurement function which will be described below with greater details.
Alternatively, any commercial existing access point, such as access point 210, can be attached to the LAN network 200 and, in this case, such access point 210 is associated with a dedicated Wimeter box 211 as shown in Figure 2.
Basically speaking, Wimeter device 211 or the Wimeter circuit 221 incorporated into access point 220 performs a continuous estimation of the available bandwidth of the considered access point and provides such estimation, upon request from a so -called Radio Resources Management Wireless LAN (RRM WLAN) device 299 for determining a new criteria for assigning an access point to one particular mobile computer, such as computer 201 shown in Figure 2.
In one particular embodiment RRM WLAN device 299 is embodied by means of a general purpose computer offering network attachment and having a software program running and executing the code and instructions for the purpose of embodying the process of the invention, and processing the particular messages which are described below.

In that case, RRM WLAN device 299 may also be used for running other applications programs which might be useful for the LAN administrator.

Alternatively, RRM WLAN device 299 may be any specific hardware equipment which is dedicated to the sole role of generating, receiving and processing the different messages which are hereinafter described with details.

The particular cooperation between RRM WLAN device 299 and the different Wimeter functions operating within the environment of the wireless network, including Wimeter box 211 and Wimeter circuit 221 embodied within access point 220 will now be described with more details.

The RRM WLAN device 299 is assumed to be switched on before the access point and particular the different Wimeter devices 211-221.

When each Wimeter device 211 or 222 is switched on and, after the execution of the POST (power on self test) routine and process, generates a socalled ATTACH REQUEST message which is forwarded to RRM WLAN device 299 in broadcast or, when the IP address of the latter is known, to unicast.

ATTACH REQUEST message includes particular information dedicated to the access point associated to the particular Wimeter device being considered such as the MAC address of the access point, the channel frequency, and the Identification of the network (SSID - Service Set IDentifier). In addition, in the particular case where RRM WLAN 99 is embodied as an application program running into a general purpose computer, the ATTACH REQUEST message also comprises the port number used by such application program.

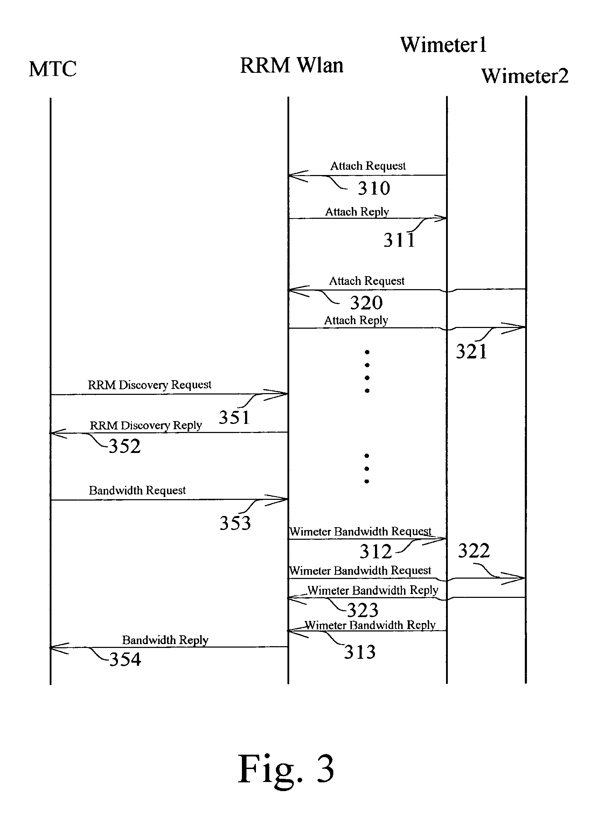

Figure 3 illustrates such ATTACH REQUEST messages 310 and 320 which are respectively generated by Wimeter device 211 and Wimeter circuit 221 embodied within access point 220.

The receiving the ATTACH REQUEST messages from the different access point allows RRM WLAN device 299 to be continuously made aware of the precise topology of the network.

Upon receipt of an ATTACH REQUEST message - e.g. message 310 generated by Wimeter device 211 - RRM WLAN device 299 generates a ATTACH REPLY message, represented by arrow 311 in Figure 3, which is returned back to Wimeter device 211.

ATTACH REPLY message particularly comprises confirmation or not of the acceptation of the service provided by RRM WLAN, what is advantageous in the case of different service providers which can be all handled by one single RRM WLAN device 299. In addition to such confirmation, ATTACH REPLY message may comprises additional configuration setting parameters for the Wimeter device 211.

If a Wimeter box does receive an ATTACH REPLY message from the RRM WLAN after a pre-configured period of time, it has to trigger again a new ATTACH REQUEST message toward the RRM WLAN box.

Further to the exchanges of messages 310 and 311 for Wimeter device 211 (resp. 320 and 321 for Wimeter circuit 221), the estimation of the bandwidth available is continuously computed, respectively by Wimeter device 211 and circuit 221) so as to be reported, upon request, to RRM WLAN device 299.

It will now be described the particular process which is executed when one mobile computer - such as computer 201 - of Figure 2 enters within the environment of the wireless network and request access to the network.

Mobile terminal 201 is assumed to be a computer of Information Handling System (I.H.S.) apparatus fitted with wireless connection. Generally speaking, such mobile terminal may be a mobile laptop computer fitted with an operating system, a wireless communication card and different I/O devices and software program.

Mobile terminal 201 particularly incorporates one software program or agent - designated as a Mobile Terminal Controller (MTC) block 202 (in Figure 2), which is designed to get the control of the wireless communication card for executing the different steps and procedures described hereinafter.

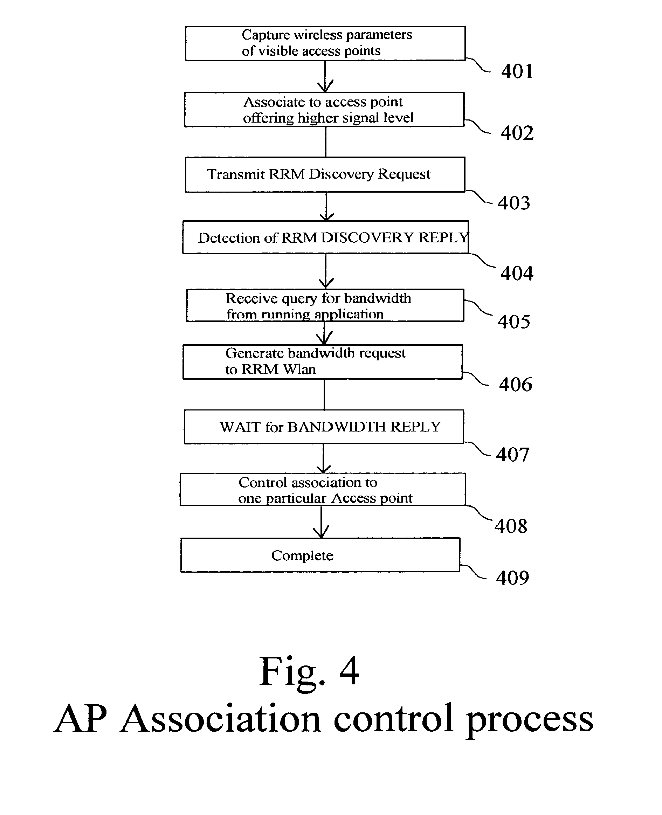

Generally speaking, when mobile computer 201 enters within the wireless environment of the network, the wireless connection card senses in a step 401 illustrated in Figure 4 the particular parameters of the wireless network in accordance with known method. Such parameters include the MAC address of the visible Access point (ie. Access points 210 and 220 of Figure 2), the strength of the signal and the SSID of the latter, when applicable.

The process then proceeds in a step 402 to the association of the mobile computer 201 to the particular access point offering the higher signal level in accordance with known procedure of the 802.11 IEEE Standard. In that case, it is assumed to be associated with access point 210 which is closer to mobile terminal 202.

In a next step, the process then launches a process of discovery in a step 403 by means of the generation of a RRM DISCOVERY REQUEST message 351, as illustrated in Figure 3. In one particular embodiment RRM DISCOVERY MESSAGE is a broadcast message with a TTL= 2 in order to go beyond the first access point and attempt to reach the RRM WLAN device 299.

In a step 404, the process then waits for the detection of a RRM DISCOVERY REPLY generated by RRM WLAN device 299, as illustrated by arrow 352 in Figure 3.

In one particular embodiment, if no reply reaches mobile terminal 201, then MTC circuit 201 may optionally regenerate a further RRM DISCOVERY REQUEST with an increased value of TTL in order to retry the discovery procedure.

Assuming now that a user application is launched within terminal 201 which requesting some wireless communication resources. Such application can be any kind of video, audio or multimedia application or even classical application (mail, web, ftp, etc.) requiring some bandwidth.

In a step 405, MTC block 202 receives such query for bandwidth resources and then generates, in a step 406, a BANDWIDTH REQUEST which is forwarded to RRM WLAN device 299.

It should be noticed that the MTC can be designed to monitor the traffic generated by the applications running in the mobile terminal, and in response to said monitoring initiates the launching of the generation of the BANDWIDTH REQUEST. The skill man will make such designs in different ways which will not be developed hereinafter.

This BANDWIDTH REQUEST message contains two distinctive types of information:

- information relative to the application requiring wireless communication resources, such as the size of packets, the transfer mode (unicast, broadcast or multicast) etc...
- information relative to the different access points which are visible to the terminal 201, including the MAC address of such access point, the MAC address of the radio interface of the mobile device from which this access points is visible, the strength of the received signal. and the frequency channel used by this access point.

In addition, the BANDWIDTH REQUEST message may contain information relative to the mobile terminal requesting the bandwidth allocation such us the link-layer data rate of the wireless communication card and the value of the basic rate (used to send the physical header).

In a step 407, the MTC block waits for a BANDWIDTH REPLY coming from the RRM WLAN device 299 which contains the available resources in each access point visible to mobile terminal 201. This BANDWIDTH REPLY is illustrated in reference with arrows 354 in Figure 3. In this embodiment, the selection of the optimal access point will be done at the mobile terminal 201.

In one particular embodiment, the BANDWIDTH REPLY which is generated by RRM WLAN device 299 comprises the particular access point - e.g. access point 220 - which is recommended to the mobile terminal for the wireless access. Hence, in this case the selection of the optimal access point is done at the RRM WLAN device 229.

In that situation, MTC 202 identifies that access point, and thus controls associated to that particular access point in a step 408.

In a step 409, the access point association process completes and the application software running into mobile terminal 201 may take profit of the communication resources provided by access point 220 which is the less loaded within the network.

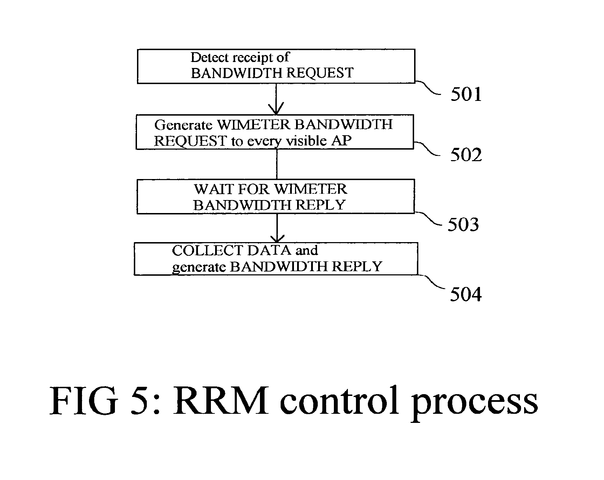

With respect to Figure 5, there is now described the process which is performed by RRM WLAN device 299 further to the receipt of a BANDWIDTH REQUEST message generated by mobile terminal 201.

In a step 501, the message BANDWIDTH REQUEST is detected by RRM WLAN device 299.

Upon detection of said message, RRM WLAN device 299 extracts the list of access points being visible to the requesting mobile terminal 201, and then successively forwards in a step 502 one particular message to every Wimeter device identified in the BANDWIDTH REQUEST received from the mobile terminal 201.

A so called WIMETER BANDWIDTH REQUEST is thus forwarded to the Wimeter device assigned to every visible access point. Two WIMETER BANDWIDTH REQUEST messages, respectively illustrated by arrows 312 and 322 in Figure 3, are thus forwarded to Wimeter device 211 (associated to AP 210) and Wimeter bloc 221 within Access point 220.

In one embodiment, such WIMETER BANDWIDTH information includes information relating to the application (size of packet, transfer mode, etc.), as well as information relating to the mobile terminal 201.

The RRM WLAN then waits for the receipt of a WIMETER BANDWIDTH REPLY from the requested Wimeter devices, in a step 503.

In one particular embodiment, the RRM WLAN device 299 generates the BANDWIDTH REPLY message to the mobile terminal 201 as soon as it receives one particular WIMETER BANDWIDTH message which is likely to comply with the bandwidth requirement of the mobile terminal 201.

Alternatively, the RRM WLAN device 299 waits for a predetermined time stamp before preparing the BANDWIDTH REPLY message so as to incorporate within said message a valuable collection of data for the attention of the MTC module 202 within mobile terminal 201.

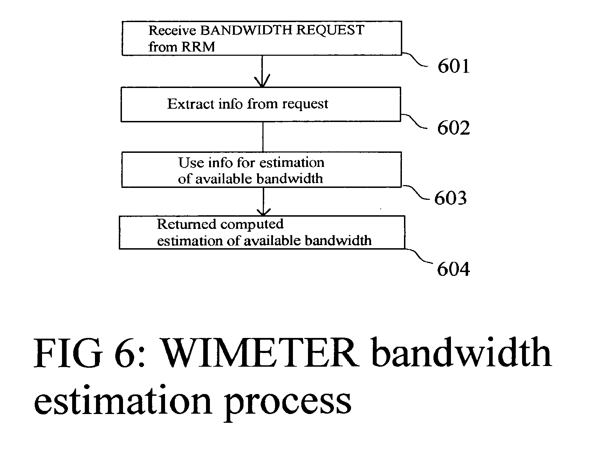

With respect to Figure 6, there is now described the particular process which is executed within the Wimeter devices 211 or 221.

In a step 601, the Wimeter device receives the WIMETER BANDWIDTH REQUEST message from the RRM WLAN device 299.

Then, in a step 602, the Wimeter device extracts from the received message the information relating to the application requesting bandwidth, in particular the transfer mode, the size of packets, the data link-layer rate and the basic rate of the wireless communication card of the mobile terminal 201.

Then, in a step 603, the Wimeter device incorporates that information in the on-going bandwidth computation algorithm which is described hereinafter with more details.

In a step 604, the Wimeter device is being returned an estimation of the available bandwidth and such estimation is then used for preparing a WIMETER BANDWIDTH REPLY message which is forwarded to RRM WLAN device 299.

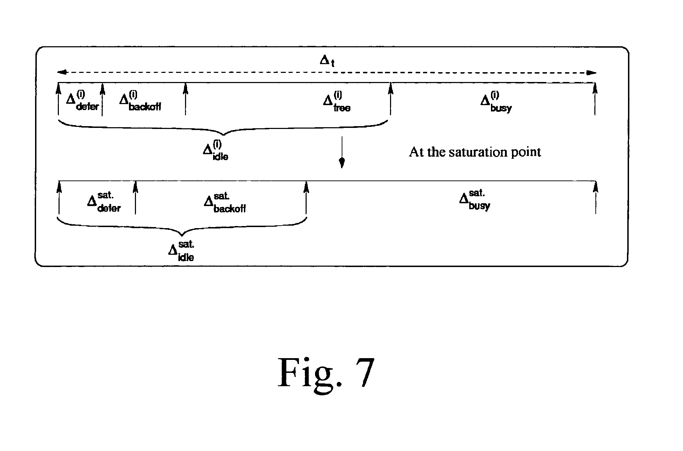

There will now be described the principle of the computation of the available bandwidth by WIMETER devices 211 or circuit 221 for the purpose of estimating the available bandwidth, in reference with Figure 7.

**Description of the Wimeter's bandwidth measurement algorithm**

**Applicable definitions:**

The following definitions shall be applicable:

- **The available bandwidth** is defined as the rate in Mbps at which a new flow can send traffic without affecting competing flows. This parameter measures the bandwidth available at the application layer. In other words, it does not include the overhead caused by the headers added at lower layers (transport, network, MAC, physical).

- **The channel capacity** is defined as the maximum traffic rate that the wireless 802.11 channel can support. For example, it is equal to 11Mbps for 802.11b-based networks and to 54Mbps for wireless LANs using the 802.11 a standard.

- **The network load** is defined as the aggregated data throughput of all packets sent in the network. It is expressed in Mbps and it is always less than the channel capacity.

- **The node capacity** is defined as the instantaneous channel capacity of a node in the WLAN. For example in IEEE 802.11 b the access point has always a capacity of 11Mbps and user stations implement a rate-automatic adaptation mechanism to change their sending rate according to the quality of the link toward the access point. This mechanism could be disabled using for example iwconfig command under Linux. In IEEE 802.11 b four rates are available 1 Mbps, 2Mbps, 5.5Mbps, and 11Mbps. Each node (AP or user station) could be the sender or the receiver of a data frame. As seen hereinafter, the transmission time of a given frame depends on the sender capacity and the receiver capacity at the instant of transmission.

The terms data load, data throughput, and data bandwidth are used interchangeably.

**The preferred embodiment for the algorithm of evaluation of the available bandwidth**

The available bandwidth estimation technique which is proposed is a type of sniffing-based mechanism since Wimeter 211 or 221 are located closely to the associated access points (resp. 210 and 220) and may capture continuously capturing all frames directed to the associated access point.

One designates $\Delta_t$ to be a period of time (e.g. in seconds) during which the Wimeter mechanism function in devices 211 and 221 collects periodic measurements. As shown in Figure 7, each measurement period $\Delta_t$ can be presented as the sum of fractions of time at each measurement step and its components can be estimated when the network will be at the saturation point which means that all mobile stations have packets waiting to be sent.

At each measurement step number i, the period $\Delta_t$ can be expressed as follows:

$$\Delta_t = \Delta_{busy}^{(i)} + \Delta_{idle}^{(i)}$$

where:

- $\Delta_{busy}^{(i)}$: The fraction of the period of time $\Delta_t$ when the medium is busy because of the transmission of a frame whatever is the type (data, acknowledgement, etc.)

- $\Delta_{idle}^{(i)}$: The fraction of the period of time $\Delta_t$ where there is no transmission in the wireless medium.

In IEEE 802.11 standard, for each transmitted frame, a station has to defer one or more timeslots and to backoff for each retransmission attempt with a randomly generated number of timeslots. Consequently, when observing the medium, it is not possible for Wimeter to distinguish between idle times corresponding to backoff or defer timeslots before a frame transmission attempt and those due to the fast that all mobile terminals in the network did not try to transmit frames during that period. The idle time at measurement interval i can be then expressed as follows

$$\Delta_{idle}^{(i)} = \Delta_{free}^{(i)} + \Delta_{defer}^{(i)} + \Delta_{backoff}^{(i)}$$

where

- $\Delta_{free}^{(i)}$ : The portion of $\Delta_t$ at measurement step $i$ where there is no frame waiting to be sent in all mobile stations.

- $\Delta_{backoff}^{(i)}$ : The portion of $\Delta_t$ at measurement step $i$ where there is at least one station decreasing its backoff to send a frame.

- $\Delta_{defer}^{(i)}$ : The portion of $\Delta_t$ at measurement step i where there is at least one station deferring before transmitting a control management or data frame.

**Computed variables for each measurement period:**

For each measurement period number $I$ of duration $\Delta_t$ and after processing all captured frames during this period, Wimeter device 211 or 221 has to measure the following parameters:

- $N_{data}^{(i)}$ : Number of data frames observed during $\Delta_t$.

- $N_{ack}^{(i)}$ : Number of ack frames observed during $\Delta_t$.

- $N_{rts}^{(i)}$ : Number of rts frames observed during $\Delta_t$.

- $N_{cts}^{(i)}$ : Number of cts frames observed during $\Delta_t$.

- $N_{bytes}^{(i)}$ : Total number of bytes sent during $\Delta_t$.

- *NetworkLoad*$^{(i)}$: the traffic load in bps (bits per seconds) during $\Delta_t$ expressed as follows

$$NetworkLoad^{(i)} = \frac{N_{bytes}^{(i)} * 8}{\Delta_t}$$

- Compute $\Delta_{idle}^{(i)}$ as follows

$$\Delta_{idle}^{(i)} = \Delta_t \left( 1 - \frac{NetworkLoad^{(i)}}{ChannelCapacity} \right)$$

with *ChannelCapacity* is the maximum transmission capacity in the networks expressed in bps (bits per second).

- $\Delta_{defer}^{pkt}$ : The defer time for each frame. Denote aSlotTime to be the duration of a time slot in seconds and SIFS and DIFS, as known in the IEEE 802.11 Standard are the duration of the sifs and difs periods in aSlotTime, respectively.

○ For unicast data frames:

■ $\Delta_{defer}^{pkt} = (3 * SIFS + DIFS) * aSlotTime$ when using RTS/CTS technique, and

■ $\Delta_{defer}^{pkt} = (DIFS + SIFS) * aSlotTime$ in case of not using this technique.

○ For multicast and broadcast data frames: $\Delta_{defer}^{pkt} = SIFS * aSlotTime$ regardless of the use of the RTS/CTS mechanism.

- Compute $\Delta_{defer}^{(i)}$ using the following expression:

$$\Delta_{defer}^{(i)} = \left( \left( N_{ack}^{(i)} + N_{rts}^{(i)} + N_{cts}^{(i)} \right) * SIFS + N_{data}^{(i)} * DIFS \right) * aSlotTime$$

- Compute $\Delta_{busy}^{(i)}$ as follows

$$\Delta_{busy}^{(i)} = \sum_{k=1}^{n_i} \Delta_{busy}^{(i,k)}$$

Where $n_i$ is the number active mobile stations during the measurement step $i$ and $\Delta_{busy}^{(i,k)}$ is the portion of the busy time $\Delta_{busy}^{(i)}$ which is caused by the frames transmitted by the station number k.

- $\tau(i)$: An estimation of the probability that a station transmits a frame during a time slot of the measurement period $i$. $\tau(i)$ is computed as follows

$$\tau(i) = \frac{1}{n_i} * \frac{\Delta_{busy}^{(i)}}{\Delta_t}$$

- $\tau$: The transmission probability after applying an average smoothing of $\tau(i)$ using an Exponential Weighted Moving Average (EWMA) filter as follows

$$\overline{\tau} = (1 - \alpha) * \overline{\tau} + \alpha * \tau(i)$$

The smoothing factor $\alpha$ is a configuration parameter in ]0,1[.
- $p$: The unsuccessful transmission probability is expressed as follows

$$p = 1 - \left(1 - \overline{\tau}\right)^{n_i - 1}$$

- $\overline{\Delta_{backoff}^{pkt}}$ : The average backoff time of transmitted data and RTS frames. $\overline{\Delta_{backoff}^{pkt}}$ is expressed as follows

$$\overline{\Delta_{backoff}^{pkt}} = \frac{\left((1 - 2p)(1 - p)(W_0 - 1) + 2pW_0\left(1 - (2p)^{m-1}\right)(1 - p) - p\left(1 - p^{m-1}\right)(1 - 2p) + p^m\left(2^m W_0 - 1\right)(1 - 2p)\right)}{(1 - 2p)(W_0 + 1) + pW_0(1 - (2p)^m)}$$

where $W_0$ is the initial contention window size and m is the maximum number of retransmission attempts as defined by the IEEE 802.11 standard.

- $\Delta_{backoff}^{(i)}$ is computed as follows

  ○ When using RTS/CTS mechanism:

$$\Delta_{backoff}^{(i)} = N_{rts}^{(i)} \overline{\Delta_{backoff}^{pkt}}$$

  ○ When not using RTS/CTS:

$$\Delta_{backoff}^{(i)} = N_{data}^{(i)} \overline{\Delta_{backoff}^{pkt}}$$

- $T_{coll.}^{(i)}$ : The waist time due to frames collision at measurement period *i*. As Wimeter is sniffing the medium, it is then able to detect frame collisions and computes the value of $T_{coll.}^{(i)}$ .

**Computing the available bandwidth when receiving a bandwidth request:**

When Wimeter receives a bandwidth request message it has to compute the following variables:

- $T_{frame}$: The sum of transmission times of all MAC frames required to successfully send a data frame of size $S_{data}$ bits. This variable is expressed as follows:

  ○ For unicast frames :

    ■ When using RTS/CTS handshake

$$T_{frame} = \frac{S_{data}}{C_{data}^{sender}} + \frac{H_{phy}}{C_{basic}^{sender}} + \frac{S_{ack}}{C_{data}^{receiver}} + \frac{H_{phy}}{C_{basic}^{receiver}} + T_{RTS/CTS}$$

    where

$$T_{RTS/CTS} = \frac{S_{rts}}{C_{data}^{sender}} + \frac{H_{phy}}{C_{basic}^{sender}} + \frac{S_{cts}}{C_{data}^{receiver}} + \frac{H_{phy}}{C_{basic}^{receiver}}$$

    ■ When not using the RTS/CTS mechanism

$$T_{frame} = \frac{S_{data}}{C_{data}^{sender}} + \frac{H_{phy}}{C_{basic}^{sender}} + \frac{S_{ack}}{C_{data}^{receiver}} + \frac{H_{phy}}{C_{basic}^{receiver}}$$

  ○ For multicast and broadcast frames:

$$T_{frame} = \frac{S_{data}}{C_{data}^{sender}} + \frac{H_{phy}}{C_{basic}^{sender}}$$

- $n_{sat.}^{(i)}$ : The number of frames to be sent before reaching the saturation point.

$$n_{sat.}^{(i)} = \frac{\Delta_{idle}^{(i)} - \Delta_{defer}^{(i)} - \Delta_{backoff}^{(i)}}{T_{frame} + \overline{\Delta_{backoff}^{pkt}} + \Delta_{defer}^{pkt}}$$

- $T_{coll.}$: The waist time due to a frame collision. For data frame of a size in bits is $S_{data}$, $T_{coll.}$ is computed as follows:

   ○ For the basic access: $T_{coll.} = DIFS + \overline{\Delta_{backoff}^{pkt}} + \frac{H_{phy}}{C_{sender}^{basic}} + \frac{S_{data}}{C_{sender}}$ where $H_{phy}$ is the physical header size in bits, $C_{sender}$ is the sending rate of the sender, and $C_{sender}^{basic}$ is the basic sending rate used to send the physical header. Both rates are expressed in bits per second (bps).

   ○ For the RTS/CTS access collisions generally occur only for RTS frames so:

$T_{coll.} = DIFS + \overline{\Delta_{backoff}^{pkt}} + \frac{H_{phy}}{C_{sender}^{basic}} + \frac{S_{rts}}{C_{sender}}$ with $S_{rts}$ is the size of the RTS frame in bits.

- $T_{coll.}^{(sat,i)}$ : The waist time due to collision of extra frames to send at measurement period $i$ to reach the saturation point. This time is expressed as follows

$$T_{coll.}^{(sat,i)} = n_{sat.}^{(i)} \left(1 - \left(1 - \overline{\tau}\right)^{n_i}\right) \left(1 - \frac{n_i \overline{\tau} \left(1 - \overline{\tau}\right)^{n_i - 1}}{1 - \left(1 - \overline{\tau}\right)^{n_i}}\right) T_{coll.}$$

- $T_{coll.}^{(sat.)}$ : The estimated waist time due to frames collisions at the saturation point which is equal to $T_{coll.}^{(i)} + T_{coll.}^{(i,sat.)}$.

- $x_{coll.}^{(sat.)}$ : The fraction of time in $\Delta_t$ wasted due to frame collisions

$$x_{coll.}^{(sat.)} = \frac{T_{coll.}^{(i)} + T_{coll.}^{(i,sat.)}}{\Delta_t}$$

$$n_{sat.}^{(i)} = \frac{\Delta_{idle}^{(i)} - \Delta_{defer}^{(i)} - \Delta_{backoff}^{(i)}}{T_{frame} + \overline{\Delta_{backoff}^{pkt}} + \Delta_{defer}^{pkt}}$$

The available bandwidth is then expressed as follows:

$$B_{free.}^{(i)} = \left(\frac{T_{frame}}{T_{frame} + \overline{\Delta_{backoff}^{pkt}} + \Delta_{defer}^{pkt}} \frac{\Delta_{idle}^{(i)} - \Delta_{defer}^{(i)} - \Delta_{backoff}^{(i)}}{\Delta_t} - x_{coll.}^{(sat.)}\right) C_{sender}^{data}$$

# EP 2 093 940 A1

**Claims**

1. Process for controlling the association of one terminal (201) to one particular access point (210, 220) belonging to a wireless network comprising a set of access points, said process comprising the steps of:

   - arranging at least two dedicated Wireless Measurement (Wimeter) devices (211, 221) located in the close vicinity of two respective access points (210, 220), said devices continuously computing an estimation of the available bandwidth for the dedicated access point;
   - arranging a centralized Radio Resources Management (RRM) device (299) for the purpose of collecting the results of said computation;
   - setting a Mobile Terminal Controller module (MTC) in each mobile terminal to be connected to the wireless network, said module being designed for discovering the RRM device and for exchanging messages with it in order to select the optimal access point.
   - running a process of Access Point association control for every new terminal (201) requesting access to the wireless network,

   said Access Point Association Control process comprising the steps of:

   - capturing (401) the parameters of the visible access points;
   - associating (402) said new terminal (201) to the access point offering the higher level of signal;
   - generating and transmitting (403) a RRM discovery request (RRM DISCOVERY REQUEST) for requesting benefit of service provided by said Radio Resources Management (RRM) device (299);
   - detection (404) of a RRM discovery reply (RRM DISCOVERY REPLY) from said RRM device (299) confirming access to said service;
   - in response to a query presented by a running application within said new terminal (201), generation and transmission (405, 406) to said Radio Resources Management (RRM) device (299) of a bandwidth request message (BANDWIDTH REQUEST) requesting allocation of given bandwidth resources;
   - waiting (407) for a bandwidth reply (BANDWIDTH REPLY) comprising information collected from said Wireless Measurement (Wimeter) devices (211, 221) associated to visible access point, said reply being prepared and forwarded by said Radio Resources Management device (299);
   - controlling (408) association to one particular access point based on said information forwarded by said Bandwidth reply message received from said RRM device (299).

2. Process according to claim 1 **characterized in that** it comprises the step of receiving within said terminal (201) the collection of the results of the computation performed by said Wireless Measurement devices (211, 221), and using such collected data for controlling the association to one particular access point.

3. Process according to claim 1 **characterized in that** it said centralized Radio Resources Management (RRM) device (299) uses the collected data computed by said Wireless Measurement (Wimeter) devices (211, 221) and selects one particular access point which is identified into said bandwidth reply forwarded to the new terminal requesting access to the wireless network.

4. Process according to claim 1 **characterized in that** one among said Wireless Measurement (Wimeter) device (211, 221) is embedded as hardware circuitry with software executable code within said associated access point.

5. Process according to claim 1 **characterized in that** one among said Wireless Measurement (Wimeter) device (211, 221) is a dedicated device distinct from the associated access point.

6. Process according to claim 1 **characterized in that** it said centralized Radio Resources Management (RRM) device (299) generates said bandwidth request message (BANDWIDTH REQUEST) with information determining the size of the packets and the transfer mode, and that said Wireless Measurement (Wimeter) devices (211, 221) uses said information for computing an estimation of the bandwidth being available for the associated access point.

7. Process according to claim 1 **characterized in that** said Wireless Measurement (Wimeter) device (211, 221) compute an estimation of the available bandwidth each measurement period $\Delta_t$ from the estimation of the following parameters:

- $N_{data}^{(i)}$ : Number of data frames observed during $\Delta_t$.

- $N_{ack}^{(i)}$ : Number of ack frames observed during $\Delta_t$.

- $N_{rts}^{(i)}$ : Number of rts frames observed during $\Delta_t$.

- $N_{cts}^{(i)}$ : Number of cts frames observed during $\Delta_t$.

- $N_{bytes}^{(i)}$ : Total number of bytes sent during $\Delta_t$.

- *NetworkLoad*$^{(i)}$: the traffic load in bps (bits per seconds) during $\Delta_t$ expressed as follows

$$NetworkLoad^{(i)} = \frac{N_{bytes}^{(i)} * 8}{\Delta_t}$$

$$\Delta_{idle}^{(i)} = \Delta_t \left( 1 - \frac{NetworkLoad^{(i)}}{ChannelCapacity} \right)$$

with *ChannelCapacity* is the maximum transmission capacity in the networks expressed in bps (bits per second).

8. Wireless Measurement device to be associated to one access point of a wireless network, said device being able to communicate with a centralized Radio Resources Management (RRM) device (299) for the purpose of collecting the results of said computation;
said device being **characterized in that** it comprises :

- means for receiving from said centralized Radio Resources Management (RRM) device (299) a message requesting bandwidth measurement comprising data representative of the communication of a new terminal requesting access to the wireless network,
- means for generating an estimated value of the available bandwidth for the attached access point to said centralized Radio Resources Management (RRM) device (299) for the purpose of collecting the results of said computation;

9. Mobile terminal for a wireless network comprising at least two different access points, said terminal comprising:

- means for capturing (401) the parameters of the visible access points;
- means for associating (402) said new terminal (201) to the access point offering the higher level of signal ;
- means for generating and transmitting (403) a RRM discovery request (RRM DISCOVERY REQUEST) to a centralized Radio Resources Management (RRM) device (299) for requesting benefit of a service from said (RRM) device (299);
- means for detecting (404) of a RRM discovery reply (RRM DISCOVERY REPLY) from said RRM device (299) confirming access to said service;
- in response to a query presented by a running application within said new terminal (201), means for generating and transmitting (405, 406) to said Radio Resources Management (RRM) device (299) of a bandwidth request message (BANDWIDTH REQUEST) requesting allocation of given bandwidth resources;
- means for waiting (407) for a bandwidth reply (BANDWIDTH REPLY) comprising information collected from said Wireless Measurement (Wimeter) devices (211, 221) associated to visible access point, said reply being prepared and forwarded by said Radio Resources Management device (299);
- means for controlling (408) association to one particular access point based on said information forwarded by said Bandwidth reply message received from said RRM device (299).

10. Process according to anyone of claims 1 to 7 **characterized in that** It should be noticed that the MTC can be designed to monitor the traffic generated by the applications running in the mobile terminal, and in response to said monitoring initiates the launching of the generation of the BANDWIDTH REQUEST. The skill man will make such designs in different ways which will not be developed hereinafter.

Fig. 1

EP 2 093 940 A1

Fig. 2

Fig. 3

Fig. 4
AP Association control process

```
┌─────────────────────────────┐
│      Detect receipt of      │
│     BANDWIDTH REQUEST       │
└─────────────────────────────┘ ⟍ 501
              │
              ▼
┌─────────────────────────────┐
│  Generate WIMETER BANDWIDTH │
│  REQUEST to every visible AP│
└─────────────────────────────┘ ⟍ 502
              │
              ▼
┌─────────────────────────────┐
│      WAIT FOR WIMETER       │
│      BANDWIDTH REPLY        │
└─────────────────────────────┘ ⟍ 503
              │
              ▼
┌─────────────────────────────┐
│      COLLECT DATA and       │
│  generate BANDWIDTH REPLY   │
└─────────────────────────────┘ ⟍ 504
```

# FIG 5: RRM control process

FIG 6: WIMETER bandwidth estimation process

Fig. 7

**European Patent Office**

## EUROPEAN SEARCH REPORT

Application Number

EP 08 36 8005

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | F.FILALI: "Wimeter: a Novel Technique for Available Bandwidth Estimation in WLANs and its Assistance to QoS Provisioning" EURECOM, 9 June 2006 (2006-06-09), pages 1-16, XP002489999 * page 4, paragraph 3.1 * * page 5, line 3.2 * * page 11, paragraph 4.1 * ----- | 1-10 | INV. H04L12/28 |
| A | LAZARO O ET AL: "MULTINET: Enabler for Next Generation Pervasive Wireless Services" MOBILE AND WIRELESS COMMUNICATIONS SUMMIT, 2007. 16TH IST, IEEE, PI, 1 July 2007 (2007-07-01), pages 1-5, XP031132425 ISBN: 978-1-4244-1662-2 * page 4, right-hand column, line 31 - page 5, left-hand column, line 50 * ----- | 1-10 | |
| A | US 2006/067214 A1 (RAMACHANDRAN LAKSHMI [IN]) 30 March 2006 (2006-03-30) * abstract * * paragraph [0015] * * paragraph [0023] * ----- | 1-10 | TECHNICAL FIELDS SEARCHED (IPC) H04L |

The present search report has been drawn up for all claims

| Place of search | Date of completion of the search | Examiner |
|---|---|---|
| The Hague | 30 July 2008 | Larcinese, Concetta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 36 8005

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2008

| Patent document cited in search report | Publication date | Patent family member(s) | Publication date |
|---|---|---|---|
| US 2006067214 A1 | 30-03-2006 | NONE | |

EPO FORM P0459

For more details about this annex : see Official Journal of the European Patent Office, No. 12/82